(19) Europäisches Patentamt
European Patent Office
Office européen des brevets

(11) Publication number: 0 237 599 B1

(12) EUROPEAN PATENT SPECIFICATION

(45) Date of publication of patent specification: 23.01.91 Bulletin 91/04

(51) Int. Cl.$^5$: B60C 9/26

(21) Application number: 86103737.2

(22) Date of filing: 19.03.86

# (54) Pneumatic radial tire for passenger car.

(43) Date of publication of application: 23.09.87 Bulletin 87/39

(45) Publication of the grant of the patent: 23.01.91 Bulletin 91/04

(84) Designated Contracting States: DE FR GB IT

(56) References cited:
DE-A- 2 028 243
FR-A- 2 126 227
FR-A- 2 235 810
GB-A- 1 486 746
US-A- 3 404 721
US-A- 4 044 540
PATENTS ABSTRACTS OF JAPAN, vol. 9, no. 229 (M-413)[1952], 14th September 1985; & JP-A-60 85 001 (OOTSU TIRE K.K.) 14-05-1985

(73) Proprietor: THE YOKOHAMA RUBBER CO., LTD.
36-11, Shimbashi 5-chome Minato-ku
Tokyo, 105 (JP)

(72) Inventor: Kabe, Kazuyuki
15-1, Ikejiri 4
Setagaya-ku Tokyo (JP)
Inventor: Morikawa, Tuneo
2211, Minamigaoka
Hadano-shi Kanagawa-ken (JP)
Inventor: Takahashi, Shuji
11-101, Takamura 203
Hiratsuka-shi Kanagawa-ken (JP)

(74) Representative: Weber, Dieter, Dr. et al
Dr. Dieter Weber und Dipl.-Phys. Klaus Seiffert
Patentanwälte Gustav-Freytag-Strasse 25
Postfach 6145
D-6200 Wiesbaden 1 (DE)

EP 0 237 599 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates generally to a pneumatic radial tire for a passenger car, and more specifically to a pneumatic radial tire for a passenger car having an improved belt layer structure in order to improve high speed performance and driving confortableness of the tire and to reduce the tire weight.

Requirements for tires have become severer and severer in recent years with the development in highways, and steel radial tires have replaced conventional bias tires as the tires that satisfy these requirements.

In steel radial tires, a carcass layer having its reinforcing cords arranged substantially at 90° to a tire circumferential direction is disposed between a pair of right and left bead portions and is covered with a plurality of belt layers reinforced by steel cords. Therefore, the steel radial tires exhibit various excellent properties as the tire in high speed performance, driving stability, wear resistance, low rolling resistance, and so forth.

However, the steel radial tire is not yet free from the problem in that driving comfortableness is not high because a plurality of belt layers reinforced by the steel cords are hard and stiff.

In conjunction with the tire weight, the weight of the steel radial tire has been reduced recently to such a level which is substantially equal to that of bias tires of an equivalent size, but further reduction of the tire weight seems to have reached the limit.

Since a plurality of belt layers reinforced by the steel cords have great mass, the belt layers are likely to swell up due to the centrifugal force of the tire at the time of high speed rotation, whereby so-called "separation" is likely to occur at both end portions of the belt layers. Thus, the steel radial tire has reached the limit in the aspect of high speed performance, too.

A fire according tọ the preamble of claim 1 is known, e. g. from FR-A-2235810.

It is the object of the present invention to provide a pneumatic radial tire as defined in the preamble of claim 1 in which high speed performance and driving comfort are improved and wherein the tire weight is reduced.

This object is adrieved by the tire according to claim 1.

The above and other objects and novel features of the present invention will become more apparent from the following description when taken in conjunction with the accompanying drawings.

Figs. 1(a) through 1(d) show some preferred embodiments of the present invention, wherein :

Fig. 1(a) is a partial cut-away perspective view of a first embodiment ; and

Figs. 1(b) through 1(d) are schematic views, each showing the principal portions, of second to fourth embodiments ;

Fig. 2 is a diagram showing the result of the test for comfortableness to drive ; and

Fig. 3 is a diagram showing the result of the test for high speed performance.

In Fig. 1(a), symbol E represents a pneumatic radial tire for a passenger car in accordance with the first embodiment of the present invention. This radial tire consists of a pair of right and left bead portions 1, 1, a pair of right and left side wall portions 2, 2 continuing the bead portions 1, 1 and a tread portion 3 interposed between the side wall portions 2, 2. A carcass layer 4 whose cord angle is from 70° to 90° to a tire circumferential direction is fitted between the right and left bead portions 1, 1, and a multi-layered belt layer 5 which cross one another at a cord angle of 10° to 35° to the tire circumferential direction is disposed on the carcass layer 4 at the tread portion 3.

(1) In the present invention, among the belt layer 5 described above, a belt layer 5d consisting of aromatic polyamide fiber cords P is disposed on the carcass layer side 4, and a belt layer 5u consisting of carbon fiber cords C is disposed on the tread portion side 3 close to the belt layer 5d.

Since the aromatic polyamide fiber cords P are used as the reinforcing cords for the belt layer 5d on the carcass layer side as described above, this embodiment provides the following effects.

(a) In comparison with the belt layer of the conventional steel radial tire which is reinforced by steel cords, the outward bending rigidity of the surface of the belt layer can be reduced. Therefore, impact force at the time of getting over a projection can be mitigated and comfortableness to drive can be drastically improved.

(b) When the total strength remains the same, this embodiment can reduce the weight in comparison with the belt layer using the steel cords as the reinforcing cords. Therefore, high speed performance can be improved.

The aromatic polyamide fiber cords P to be used as the reinforcing cords of the belt layer 5d on the carcass layer side are preferably produced by twisting aromatic polyamide fibers having properties of tensile strength of at least 150 $kg/mm^2$ and tensile elastic modulus of at least 3,000 $kg/mm^3$ in such a fashion that a twist coefficient K expressed by the following formula is in the range of $1{,}000 \leq K \leq 2{,}500$ to form the cords and then subjecting the cords to bonding heat-treatment :

$$K = T\sqrt{D}$$

where
K ... twist coefficient,
T ... number of twists of cord (turns/10 cm),
D ... total denier of cord.

In the present invention, since the carbon fiber cords C are used as the reinforcing cords of the belt layer 5u on the tread portion side as described above, comfortableness to drive can be improved drastically in comparison with the conventional steel radial tire for the same reason as in the case of the belt layer 5d on the carcass layer side which uses the aromatic polyamide fiber cords P as the reinforcing cords, and high speed performance can likewise be improved.

Preferably, the carbon fiber cords C to be used as the reinforcing cords of the belt layer 5u on the tread portion side are prepared by putting 10 to 50%, based on the unit length of the carbon fiber, of an adhesive to the carbon fiber having tensile strength of at least 100 $kg/mm^2$ and preferably at least 200 $kg/mm^2$ and tensile elastic modulus of at least 5,000 $kg/mm^2$ and preferably at least 15,000 $kg/mm^2$, and then twisting the carbon fiber cords in such a fashion that the twist coefficient K expressed by the following formula is within the range of $0 \leq K \leq 1,800$ :

$$K = T\sqrt{D}$$

where
K ... twist coefficient,
T ... number of twists of cord (turns/10 cm),
D ... total denier of cord.

The twist structure in this case may be a folded twist structure wherein several carbon fibers are first subjected to primary twisting and then several twisted fibers are subjected to final twisting, or a single twist structure wherein one filamentary carbon fiber is merely twisted.

Incidentally, it is not preferred to dispose the belt layers consisting of the aromatic polyamide fiber cords P on both carcass layer side 4 and the tread portion side 3 because rigidity in the tire circumferential direction becomes insufficient and driving stability will be lower than that of the conventional steel radial tire.

(2) In accordance with the present invention, further, the end portions of at least one layer of the belt layers 5d on the carcass layer side consisting of the aromatic polyamide fiber cords P are bent towards the tread portion side 3, and these belt portions $5d_1$ cover the end portions of the belt layer 5u on the tread portion side consisting of the carbon fiber cords C.

In other words, the end portions of the belt layer 5u on the tread portion side consisting of the carbon fiber cords C are covered with the bent portions $5d_1$ of the belt layer 5d on the carcass layer side consisting of the aromatic polyamide fiber cords P that have higher bending fatigue resistance than the belt layer 5u.

Therefore, protection of the end portions of the belt layer 5u on the tread portion side consisting of the carbon fiber cords C can be drastically improved. Therefore, it is possible to prevent the swell of the end portions of the belt layer due to the centrifugal force of the tire during high speed driving, to check the occurrence of separation and to improve the durability of tire.

In the first embodiment of the present invention shown in Fig. 1(a), one belt layer 5d consisting of the aromatic polyamide fiber cords P is disposed on the side of the carcass layer 4, while on layer of the belt layer 5u consisting of the carbon fiber cords C is disposed on the side of the tread portion 3 in the proximity of the belt layer 5d on the carcass layer side. Furthermore, both right and left end portions of the belt layer 5d on the carcass layer side consisting of the aromatic polyamide fiber cords P are bent towards the tread portion 3, and these bent portions $5d_1$ cover the right and left end portions of the belt layer 5u on the tread portion side consisting of the carbon fiber cords.

In the second embodiment of the present invention shown in Fig. 1(b), two belt layers 5d consisting of the aromatic polyamide fiber cords P are disposed on the carcass layer side 4 while one belt layer 5u consisting of the carbon fiber cords C is disposed on the tread portion side 3 in the proximity of the belt layers 5d on the carcass layer side. Furthermore, one of the end portions of each belt layer 5d on the carcass layer side consisting of the aromatic polyamide fiber cords P is bent towards the tread portion 3 in such a manner

as to face the bent end portion of the other belt layer 5d and to cover the right and left end portions of the belt layer 5u on the tread portion side consisting of the carbon fiber cords C.

In the third embodiment of the present invention shown in Fig. 1(c), one belt layer 5d consisting of the aromatic polyamide fiber cords P is disposed on the carcass layer side 4 while two belt layers 5u consisting of the carbon fiber cords C are disposed on the tread portion side 3 in the proximity of the belt layer 5d. Furthermore, both right and left end portions of the belt layer 5d consisting of the aromatic polyamide fiber cords P are bent towards the tread portion 3 so that these bent portions $5d_1$ cover both right and left portions of the belt layers 5u consisting of the carbon fiber cords C.

In the fourth embodiment of the present invention shown in Fig. 1(d), two belt layers 5d consisting of the aromatic polyamide fiber cords P are disposed on the carcass layer side 4 while one belt fiber 5u consisting of the carbon fiber cords C is disposed on the tread portion side 3 in the proximity of the belt layers 5d, and both right and left end portions of the lower layer of the belt layers 5d are bent towards the tread portion 3 in such a manner that the end portions $5d_1$ cover the right and left end portions of the belt layer 5u on the tread portion side consisting of the carbon fiber cords C.

Next, the effect of the present invention will be described more definitely with reference to Experimental Example.

Experimental Example :

Driving comfortability (vibration comfortableness performance) test and high speed performance test were carried out using the tire of the present invention and the conventional radial tire, each having the following specification.

[The Present Radial Tire]

tire size ....... 205/60 R 15

carcass layer ... one layer using polyester cords of 1,000d/2 as the reinforcing cords were disposed in such a manner that the cord angles was 90° to the tire circumferential direction.

belt layer on carcass layer side ... one layer using aromatic polyamide fiber cords of 1,500d/2, $35^Z$ x $35^S$ turns/10 cm, K = 1917 as the reinforcing cords was disposed in such a manner that the cord angle was 24° to the tire circumferential direction, and both right and left end portions of this layer were bent towards the tread portion side so that the bent portions covered the right and left end portions of the belt layer on the tread side consisting of the carbon fiber cords.

belt layer on the tread portion side ... one layer using carbon fiber cords having 1800d/2 and a twist coefficient K = 600 (folded twist structure, 10 turns/10 cm) was disposed so that the cord angle was 21° to the tire circumferential direction.

[Conventional Radial Tire]

tire size ....... 205/60 R 15

carcass layer ... one layer using polyester cords of 1000d/2 as the reinforcing cords was disposed so that the cord angle was 90° to the tire circumferential direction.

belt layer on the carcass layer side ... one layer using steel cords of 3 x 7 (0.15) as the reinforcing cords was disposed so that the cord angle was 24° to the tire circumferential direction, and both right and left end portions were bent towards the tread portion side so that these bent portions covered the right and left end portions of the belt layer on the tread portion side.

belt layer on the tread portion side ... one layer using steel cords of 1 x 5 (0.25) as the reinforcing cords was disposed so that the cord angle was 21° to the tire circumferential direction.

(a) Driving comfortability test :

Driving comfortability test was carried out indoors using each of the sample tires described above and a projection tester.

The projection tester is equipped with a semispherical projection of a 20 mm diameter at one position on the periphery of a drum which is 2,500 mm in diameter, and detects the axial force when the sample tire gets over the projection. The magnitude of this axial force is used as a representative value of the driving comfortability. In this case, the driving comfortability test was carried out at an air pressure of 2.0 kg/cm², a load of 515 kg and speeds of 60 km/hr, 80 km/hr, 100 km/hr and 120 km/hr, respectively.

The test results were shown in Fig. 2. The diagram represents the driving comfortability in terms of index using the test result of the conventional radial tire as 100.

As can be seen clearly from the test result shown in Table 2, the driving comfortability was improved by about 10% by the tire of the present invention when compared with the conventional radial tire.

(b) High speed performance test :

High speed performance test was carried out indoors using each of the sample tires described above and a drum tester (1,707 mm in diameter).

In this case, the air pressure was 3.0 $kg/cm^2$ and the load was 515 kg but the speed was increased step-wise by 10 km/hr every 10 minutes until the tire was broken.

The test result was shown in Fig. 3. The diagram represents the high speed performance in terms of index using the test result of the conventional radial tire as 100.

As can be seen clearly from the test result shown in Fig. 3, the high speed performance could be improved by about 5% by the tire of the present invention when compared with the conventional radial tire.

As described above, the present invention disposes the belt layer consisting of the aromatic polyamide fiber cords on the carcass layer side and the belt layer consisting of the carbon fiber cords on the tread portion side in the proximity of the belt layer on the carcass layer side. Furthermore, the end portions of at least one layer of the belt layers on the carcass layer side consisting of the aromatic polyamide fiber cords are bent towards the tread portions so that the bent portions cover the end portions of the belt layer on the tread portion side consisting of the carbon fiber cords. Therefore, the present invention can improve both high speed performance and driving comfortability, and can also reduce the tire weight.

## Claims

1. A pneumatic radial tire (E) for passenger cars, of the type which consists of a right and a left bead portion (1), a right and a left sidewall portion (2) continuing to the right and the left bead portions respectively, and a tread portion (3) between the sidewall portions (2), and in which a carcass layer (4) having a cord angle in the range of 70 to 90° to the circumferential direction of the tire is incorporated between the bead portions (1) and a plurality of belt layers (5) crossing one another at a cord angle in the range of 10 to 35° to the tire circumferential direction are disposed on the carcass layer (4) in the tread portion (3), wherein :

(a) said belt layers (5) include at least one first belt layer (5d) consisting of aromatic polyamide fiber cords(P) and disposed radially on the side of said carcass layer (4) and at least one second belt layer (5u) disposed radially on the side of said tread portion (3) in the proximity of said at least one first belt layer (5d);

(b)said at least one first belt layer (5d) has respective end portions ($5d_1$) bent in a manner to cover respective end portions of said at least one second belt layer (5u) on the side of said tread portion ;

characterized in that

(c) said aromatic polyamide fiber cords (P) consist of twisted aromatic polyamide fibers having a tensile strength of at least 150 $kg/mm^2$ and a tensile elastic modulus of at least 3000 $kg/mm^2$ and having a twist coefficient K within the range of $1000 \leq K \leq 2.500$ which aromatic polyamide fiber cords (P) have been subjected to a bonding heat-treatment ;

(d) said second belt layer (5u) consists of carbon fiber cords (C) being produced by applying 10 to 50% of an adhesive, based on the weight of a unit length of carbon fibers having a tensile strength of at least 100 $kg/mm^2$ and a tensile elastic modulus of at least 5000 $kg/mm^2$, to the carbon fibers, and twisting the adhesive-applied carbon fibers, said carbon fiber cords (C) having a twist coefficient K within a range of $0 \leq K \leq 1.800$, said twist coefficient K being expressed by the formula :

$$K = T \sqrt{D}, \text{ in which:}$$

T = the number of twists of the cord (turns/10cm), and

D = the total denier of the cord.

2. A pneumatic radial tire for a passenger car according to claim 1, wherein each belt layer (5) consists of one first (5d) and one second (5u) belt layer.(Fig. 1a).

3. A pneumatic radial tire for a passenger car according to claim 1, wherein each belt layer (5) consists of two first belt layers (5d), and one second belt layer (5u) one of the end portions of each of said two first belt layers (5d) is bent towards said tread portion in such a fashion that the bent portion thereof faces the bent portion of the other of said two first belt layers (5d) (Fig. 1b).

4. A pneumatic radial tire for a passenger car according to claim 1, wherein each belt layer (5) consists of one first belt layer (5d), and two second belt layers (5u), both right and left end portions of said first belt layer (5d) are bent towards said tread portion. (Fig. 1c).

5. A pneumatic radial tire for a passenger car according to claim 1, wherein each belt layer (5) consists

of two first belt layers (5d), both right and left end portions of the lower first blet layer (5d) are bent towards said tread portions (Fig. 1d).

## Ansprüche

1. Druckluftradialreifen (E) für Personenwagen, und zwar von der Art, welche aus einem rechten und linken Wulstabschnitt (1), einem rechten und einem linken Seitenwandabschnitt (2) in Fortsetzung der rechten bzw. linken Wulstabschnitte, und einem Laufflächenabschnitt (3) zwischen den Seitenwandabschnitten (2) besteht und bei welcher eine Karkassenschicht (4) mit einem Cordwinkel im Bereich von 70° bis 90° zur Umfangsrichtung des Reifens zwischen den Wulstabschnitten (1) eingearbeitet ist, und eine Mehrzahl von Gürtellagen (5), welche einander unter einem Cordwinkel im Bereich von 10° bis 35° zur Umfangsrichtung des Reifens kreuzen, auf der Karkassenschicht (4) in dem Wulstabschnitt (3) angeordnet ist, wobei :

a) die Gürtellagen (5) zumindest eine erste Gürtellage (5d) einschließen, die aus aromatischen Polyamidfasercorden (P) bestehen und in radialer Richtung auf der Seite der Karkassenschicht (4) angeordnet ist und zumindest eine zweite Gürtelschicht (5u) einschließen, die in radialer Richtung auf der Seite des Laufflächenabschnittes (3) in der Nähe der zumindest einen ersten Gürtellage (5d) angeordnet ist,

b) die zumindest eine erste Gürtellage (5d) entsprechende Endabschnitte ($5d_1$) hat, die in einer Weise gebogen sind, daß sie die entsprechenden Endabschnitte der zumindest einen zweiten Gürtellage (5u) auf der Seite des Laufflächenabschnittes abdecken,

dadurch gekennzeichnet, daß

c) die aromatischen Polyamidfasercorde (P) aus verdrillten aromatischen Polyamidfasern bestehen, die eine Zugfestigkeit von zumindest 150 kg/mm² und bezüglich Zug einen Elastizitätsmodul von zumindest 3.000 kg/mm² haben sowie einen Verdrillungskoeffizienten K innerhalb des Bereiches von $1.000 \le K \le 2.500$, wobei die aromatischen Polyamidfasercorde (P) einer bindenden Wärmebehandlung ausgesetzt worden sind,

d) daß die zweite Gürtellage (5u) aus Kohlefasercorden (C) besteht, welche durch Aufbringen von 10 bis 50% eines Klebemittels auf die Kohlefasern hergestellt werden, bezogen auf das Gewicht pro Einheitslänge der Kohlefasern, welche eine Zugfestigkeit von zumindest 100 kg/mm² und einen Elastizitätsmodul bezüglich Zug von zumindest 5.000 kg/mm² haben, und durch Verdrillen der mit dem Klebemittel versehenen Kohlefasern, wobei die Kohlefasercorde (C) einen Verdrillungskoeffizienten K innerhalb des Bereiches von $0 \le K \le 1.800$ haben, wobei der Verdrillungskoeffizient K durch die Formel ausgedrückt wird :

$$K = T\sqrt{D}$$

wobei T = Anzahl der Verdrillungen des Cords (Drehungen/10 cm), und D = die Gesamtdenierzahl des Cordes ist.

2. Druckluftradialreifen für einen Personenwagen gemäß Anspruch 1, wobei jede Gürtellage (5) aus einer ersten (5d) und einer zweiten Gürtellage (5u) besteht. (Figur 1a)

3. Druckluftradialreifen für einen Personenwagen gemäß Anspruch 1, wobei jede Gürtellage (5) aus zwei ersten Gürtellagen (5d) und einer zweiten Gürtellage (5u) besteht, wobei einer der Endabschnitte jeder der beiden ersten Gürtellagen (5d) in Richtung des Laufflächenabschnittes derart herumgebogen ist, daß der herumgebogene beschnitt derselben dem herumgebogenen beschnitt der anderen der beiden Gürtellagen zugewandt ist.

4. Druckluftradialreifen für einen Personenwagen gemäß Anspruch 1, wobei jede Gürtellage (5) aus einer ersten Gürtellage (5d) und zwei zweiten Gürtellagen (5u) besteht, wobei beide rechte und linke Endabschnitte der ersten Gürtellage (5d) in Richtung des Laufflächenabschnittes herumgebogen sind. (Figur 1c)

5. Druckluftradialreifen für einen Personenwagen gemäß Anspruch 1, wobei jede Gürtellage (5) aus zwei ersten Gürtellagen (5d) besteht, wobei beide rechte und linke Endabschnitte der unteren ersten Gürtellage (5d) in Richtung des Laufflächenabschnittes herumgebogen sind. (Figur 1d)

## Revendications

1. Pneu radial (E) pour voitures particulières, du type constitué d'une partie formant talon droite et gauche (1), d'une partie formant paroi latérale droite et gauche (2) continuant les parties formant talons droite et gauche respectivement et, une partie formant talon (3) entre les parties formant parois latérales (2), et

dans lequel une nappe de carcasse (4) présentant un angle de câblage compris dans l'intervalle de 70 à 90° par rapport à la direction circonférentielle du pneu est incorporée entre les parties formant talons (1), et une pluralité de nappes de ceinture (5) se croisant l'une avec l'autre avec un angle de câblage compris dans l'intervalle de 10 à 35° par rapport à la direction circonférentielle du pneu sont disposées sur la nappe de carcasse (4) dans la partie formant talon (3), dans lequel :

(a) lesdites nappes de ceinture (5) incluent au moins une première nappe de ceinture (5d) consistant en des cables de fibres polyamide aromatiques (P) et disposés radialement sur le côté de ladite nappe de carcasse (4) et au moins une seconde nappe de ceinture (5u) disposée radialement sur le côté de la partie formant talon (3) à proximité de ladite au moins une première nappe de ceinture (5d) ;

(b) ladite au moins une première nappe de ceinture (5d) présente des parties d'extrémité respectives ($5d_1$) repliées de manière à recouvrir les parties d'extrémité respectives de ladite au moins une seconde nappe de ceinture(5u) sur le côté de ladite partie formant talon ; caractérisé en ce que

(c) lesdits câbles de fibres polyamide aromatiques (P) consistent en des fibres polyamide aromatiques tordues ayant une résistance à la traction d'au moins 150 km/mm² et un module élastique de tension d'au moins 3000 kg/mm² et ayant un coefficient de torsion K compris dans l'intervalle de $1000 \leq K \leq 2.500$, ces câbles de fibres polyamide aromatiques (P) ayant été soumis à un traitement de liaison a la chaleur ;

(d) ladite seconde nappe de ceinture (5u) consiste en des câbles de fibres de carbone (C) étant produits en appliquant 10 à 50% d'un adhésif, basés sur le poids d'une unité de longueur de fibres de carboneayant une résistance à la traction d'au moins 100 kg/mm² et un module élastique de tension d'au moins 5.000 KG/mm², sur des fibres de carbone, et en tordant les fibres de carbone sur lesquelles a été appliqué l'adhésif, lesdits câbles de fibres de carbone (C) ayant un coefficient de torsion K à l'intérieur d'un intervalle de $0 \leq K \leq 1.800$, ledit coefficient de torsion K étant exprimé par la formule :

$$K = T\sqrt{D}$$

dans lequel :

T = le nombre de torsions de câble (tours/10 cm), et D = le denier total du câble.

2. Pneu radial pour voiture particulière selon la revendication 1, dans lequel chaque nappe de ceinture (5) consiste en une première (5d) et une seconde (5u) nappe de ceinture. (Fig. 1a)

3. Pneu radial pour voiture particulière selon la revendication 1, dans lequel chaque napppe de ceinture (5) consiste en deux premières nappes de ceinture (5d), et en une seconde nappe de ceinture (5u), l'une des parties d'extrémité de chacune desdites deux premières nappes de ceinture (5d) est repliée en direction de ladite partie formant talon de telle manière que sa partie repliée fasse face à la partie repliée de l'autre des deux dites premières nappes repliées (5d)(Fig. 1b).

4. Pneu radial pour voiture particulière selon la revendication 1, dans lequel chaque nappe de ceinture (5) est constituée d'une première nappe de ceinture (5d) et de deux secondes nappes de ceinture (5u), les deux parties d'extrémité droite et gauche de ladite première nappe de ceinture (5d) sont repliées en direction de ladite partie formant talon.(Fig. 1c).

5. Pneu radial pour voiture particulière selon la revendication 1, dans lequel chaque nappe de ceinture (5) consiste en deux premières nappes de ceinture (5d), les deux parties d'extrémité droite et gauche de ladite première nappe de ceinture inférieure (5d) sont repliées en direction desdites parties formant talons(Fig. 1d).

FIG.1 (a)

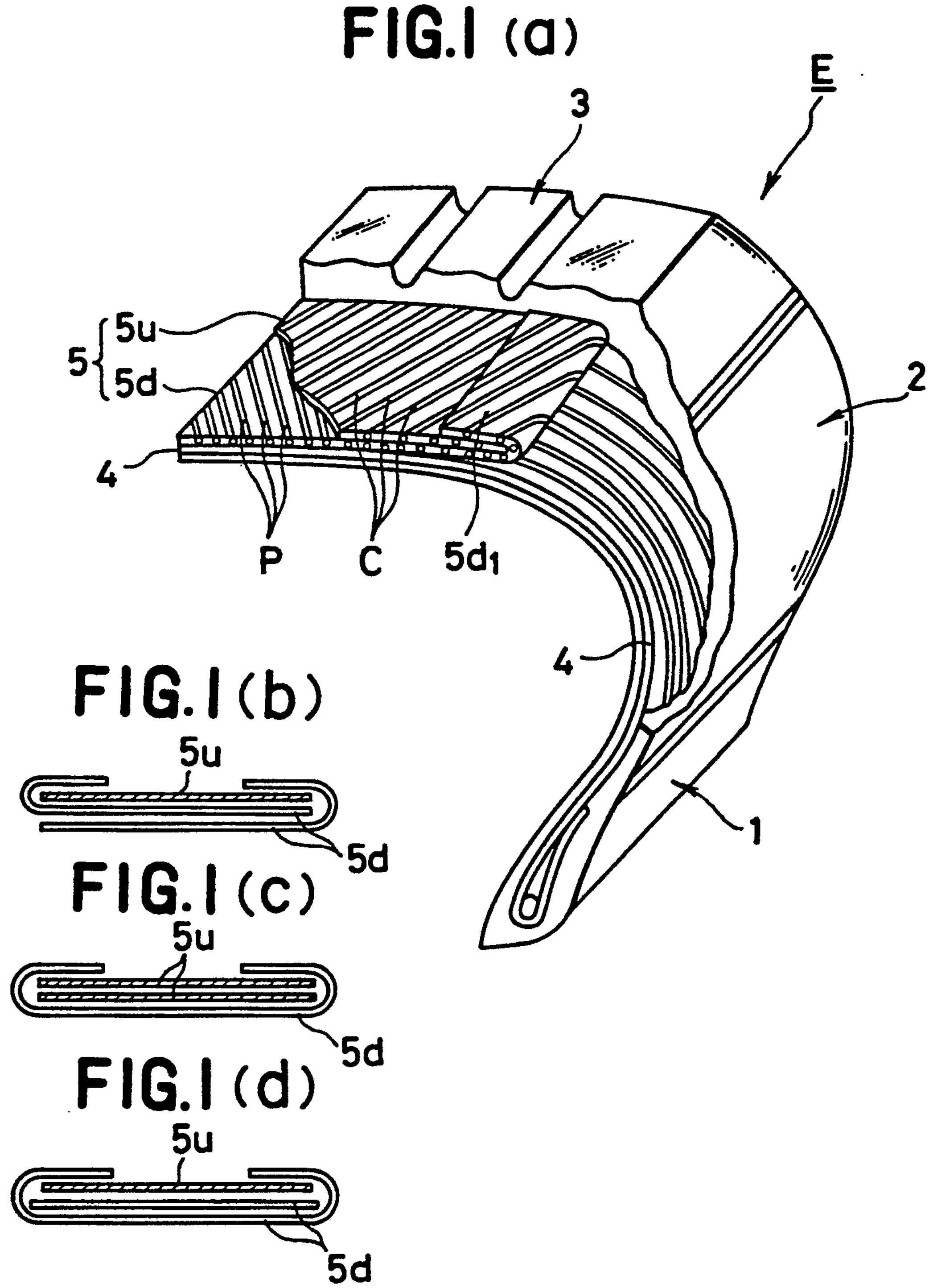

FIG.2

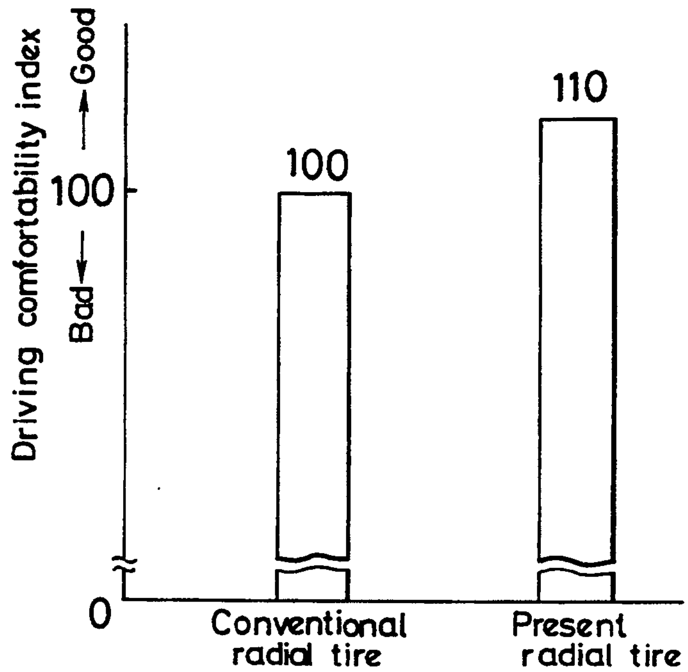
Driving comfortability index
Bad ← → Good
100
0
100
110
Conventional radial tire
Present radial tire

FIG.3

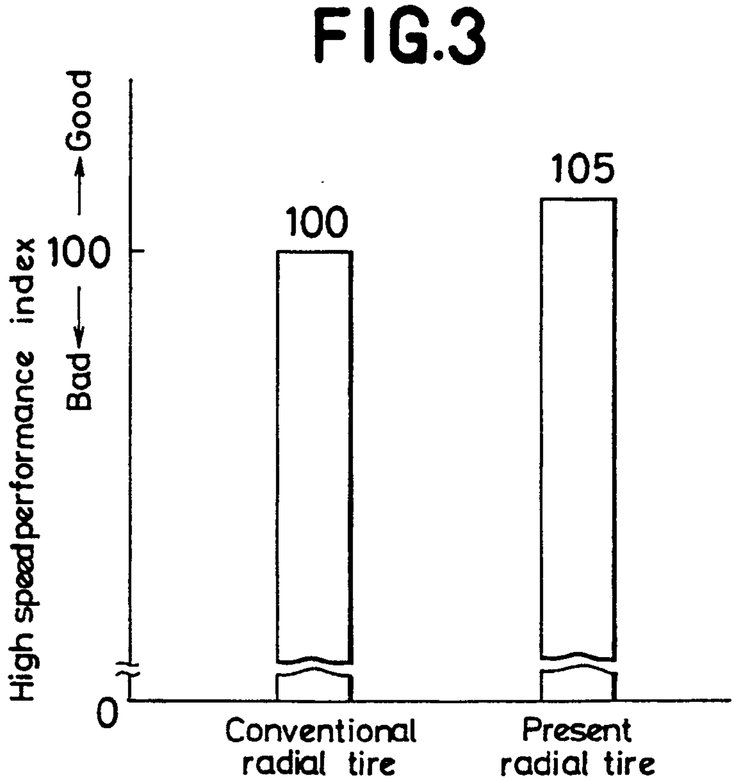
High speed performance index
Bad ← → Good
100
0
100
105
Conventional radial tire
Present radial tire